# EUROPÄISCHE PATENTANMELDUNG

(11) **EP 3 763 965 A1**
(43) Veröffentlichungstag der Anmeldung: **13.01.2021**
(21) Anmeldenummer: 20183150.0
(22) Anmeldetag: 30.06.2020
(51) Int. Cl.: F16F 7/08

(54) **BEWEGUNGSDÄMPFER**

(30) Priorität: 12.07.2019 DE 102019119003
(71) Anmelder: "DURABLE" HUNKE & JOCHHEIM GMBH & CO. KOMMANDITGESELLSCHAFT, 58636 Iserlohn (DE)
(72) Erfinder: Maier-Hunke, Horst-Werner, 58640 Iserlohn (DE)
(74) Vertreter: Beckord & Niedlich Patentanwälte PartG mbB

(57) **Zusammenfassung**

Die Erfindung betrifft einen Bewegungsdämpfer (10) mit einem Zylinder (11) und einer darin beweglich gelagerten Kolbenstange (15), wobei der Bewegungsdämpfer (10) zur Regulierung einer Bremskraft ein Bremssystem (20) aufweist, das am Zylinder (11) und/oder an der Kolbenstange (15) befestigt ist und dabei auf das jeweils andere Element bremsend einwirkt. Die Erfindung betrifft ferner einen Parallelogramm-Ausleger (100) mit einem solchen Bewegungsdämpfer (10) und einen Gerätehalter (200) mit einem solchen Bewegungsdämpfer (10).

## Beschreibung

Die Erfindung betrifft einen Bewegungsdämpfer, insbesondere eine Gasdruckfeder oder einen hydraulischen Dämpfer, mit einem Zylinder und einer darin beweglich gelagerten Kolbenstange. Weiterhin betrifft die Erfindung einen Parallelogramm-Ausleger mit einem solchen Bewegungsdämpfer, einen Gerätehalter mit einem solchen Parallelogramm-Ausleger und eine Verwendung eines solchen Bewegungsdämpfers.

Gerätehaltevorrichtungen bzw. Gerätehalter haben die Aufgabe, unterschiedlich schwere Geräte, beispielsweise einen oder mehrere Monitore, in einer gewünschten Position in der Schwebe zu halten. Außerdem soll die Position der Geräte dabei nahezu beliebig, beispielsweise auf eine ergonomische Position für einen jeweiligen Benutzer oder für unterschiedliche Einsatzzwecke, einstellbar sein. Dazu besitzen Gerätehalter üblicherweise u. a. eine Anzahl unterschiedlicher Arme, Gelenke bzw. Drehlager. Hieraus ergibt sich das folgende Problem: Einerseits sollen Gerätehalter unterschiedlich schwere Geräte in der Schwebe halten, andererseits sollen die zu haltenden Geräte aber zugleich auch bequem in unterschiedliche Positionen, z. B. in der Höhe oder auch seitlich, verfahren werden können.

Bei bereits bekannten Gerätehaltern wird dieses Problem beispielsweise dadurch gelöst, dass die Gelenke zur Anordnung eines Gerätes durch Stellschrauben im jeweiligen Gelenk, z. B. mittels eines Inbusschlüssels, festgezogen werden, so dass sich die Gelenke der Arme bei einem bestimmten Gewicht eines montierten Gerätes gerade so nicht mehr durch die Gewichtskraft des Geräts von selbst bewegen, sondern erst durch zusätzliche Kraft eines Benutzers auf Wunsch eine Bewegung erfolgt. Ein Nachteil dieser Lösung ist allerdings, dass der Benutzer die Schwergängigkeit der Gelenke mit der Zeit oder bei Veränderung des Gewichts mitunter aufwendig nachjustieren muss.

Möglich wäre es auch, Bewegungsdämpfer, wie beispielsweise Gasdruckfedern oder hydraulische Dämpfer zu benutzen, die je nach Fülldruck und Ausführung eine gewisse Ausschubkraft besitzen, die für eine bestimmte Gewichtsklasse geeignet ist. Dies sorgt allerdings jeweils nur in einem kleinen Gewichtsbereich um ein vorbestimmtes Nenn-Gewicht herum für ein zufriedenstellendes Halte- sowie Verfahr-Ergebnis. Dabei bestimmen der Fülldruck und die Ausführung des gewählten Bewegungsdämpfers ein maximales Nenn-Gewicht des Gerätes, bis zu welchem der Bewegungsdämpfer das Gerät in einer gewünschten Höhe halten kann.

Es ist daher eine Aufgabe der vorliegenden Erfindung, einen leichter einstellbaren Bewegungsdämpfer, einen leichter einstellbaren Parallelogramm-Ausleger und einen entsprechend leichter einstellbaren Gerätehalter anzugeben.

Diese Aufgabe wird durch einen Bewegungsdämpfer gemäß Patentanspruch 1, durch einen Parallelogramm-Ausleger gemäß Patenanspruch 11 und einen Gerätehalter gemäß Patentanspruch 13 gelöst.

Wie eingangs erwähnt, weist der erfindungsgemäße Bewegungsdämpfer-wie dies z. B. auch bei Gasdruckfedern oder hydraulischen Dämpfern üblich ist - einen Zylinder mit einer darin beweglich gelagerten Kolbenstange auf. Der Bewegungsdämpfer ist dabei so ausgebildet, dass eine Bewegung zwischen Kolbenstange und Zylinder gedämpft wird. Beispielsweise befindet sich zumindest ein Kolben-Abschnitt der vorzugsweise länglichen Kolbenstange innerhalb des Zylinders. "Darin beweglich gelagert" meint hier, dass die Kolbenstange zumindest in einer Längsrichtung der Kolbenstange innerhalb des Zylinders bewegt werden kann. Genauer gesagt lässt sich die Kolbenstange einerseits so weit in den Zylinder hineinschieben, bis der Kolben-Abschnitt der Kolbenstange im Zylinder an einem hinteren Anschlagpunkt, z. B. dem geschlossenen Ende des Zylinders, anschlägt, andererseits lässt sich die Kolbenstange zumindest so weit aus dem Zylinder hinausziehen, bis der Kolben-Abschnitt an einem vorderen Anschlagpunkt, z. B. an einer Verengung im Zylinder an einem offenen Ende, also an einem zur Kolbenstange weisenden Ende des Zylinders, anschlägt. Der Innenraum des Zylinders ist vorzugsweise mit einem gasförmigen Medium und/oder mit einem flüssigen Medium bzw. Fluid, wie z. B. Öl, gefüllt, welches die Bewegung der Kolbenstange im Zylinder dämpft bzw. bremst und auch erst ab einer bestimmten Mindest-Zug- bzw. Schubkraft auf die Kolbenstange überhaupt eine Bewegung erlaubt.

Der Bewegungsdämpfer, wobei es sich vorzugsweise um eine Gasdruckfeder oder einen hydraulischen Dämpfer handelt, weist dann erfindungsgemäß ein Bremssystem auf, mit dem eine einfache Regulierung einer Bremskraft, insbesondere eine mechanische Regulierung einer Bremskraft, hinsichtlich einer Relativbewegung zwischen Zylinder und Kolbenstange ermöglicht wird. Das Bremssystem ist dabei, bevorzugt außenseitig, am Zylinder und/oder an der Kolbenstange befestigt und wirkt (zusätzlich zu dem Medium im Innenraum des Zylinders) bremsend auf das jeweilige andere Element ein. D. h. das Bremssystem kann z. B. am Zylinder befestigt sein und kann folglich auf die Kolbenstange bremsend einwirken. Umgekehrt kann es beispielsweise an der Kolbenstange befestigt sein und bremsend auf den Zylinder einwirken. Eine Kombination ist aber z. B. auch möglich. Besteht nämlich das Bremssystem aus mehreren Elementen, kann es somit an beiden Elementen, also sowohl an der Kolbenstange als auch am Zylinder befestigt sein und daher entsprechend zugleich auf beide Elemente einwirken.

Dadurch, dass sich der Bewegungsdämpfer erfindungsgemäß bremsen lässt, kann er manuell auf unterschiedliche Aus- bzw. Einschubkräfte eingestellt werden. Damit erweitert sich vorteilhafterweise auch der Bereich, in dem er eingesetzt werden kann.

Ein erfindungsgemäßer Parallelogramm-Ausleger, der insbesondere zur Verwendung für einen nachfolgend beschriebenen Gerätehalter ausgebildet ist, weist zumindest einen Doppelarm mit zwei in Längsrichtung des Doppelarms verlaufenden, länglichen, voneinander beabstandeten Längsstreben und zwei die Längsstreben jeweils gelenkig verbindende Querstreben auf. Die Querstreben sind i. d. R. kürzer, vorzugsweise erheblich kürzer, als die Längsstreben. Außerdem koppeln die Querstreben jeweils an zwei voneinander beabstandeten Gelenken die Längsstreben miteinander. Die Längsstreben und die Querstreben bilden hierbei die Seiten eines Parallelogramms, welche insgesamt durch vier Gelenke des Doppelarms gelenkig verbunden sind. Außerdem weist der erfindungsgemäße Parallelogramm-Ausleger den oben beschriebenen Bewegungsdämpfer auf, der diagonal im Parallelogramm die zwei Längsstreben und/oder Querstreben vorzugsweise innerhalb des Doppelarms untereinander gelenkig verbindet, vorzugsweise direkt in zwei sich diagonal im Parallelogramm gegenüberliegenden Gelenken der vier Gelenke des Doppelarms.

Ein erfindungsgemäßer Gerätehalter umfasst ein Basisteil zur Anordnung bzw. Montage des Gerätehalters an einem Bezugsobjekt, z. B. Boden, Wand, Tisch o. Ä. Zudem weist er ein Ankupplungsteil auf, um beispielsweise einen zu haltenden Monitor mit dem Gerätehalter, insbesondere Monitorhalter, zu kuppeln. Dabei ist das Basisteil über eine Gelenkanordnung (mit zumindest einem Glied, vorzugsweise aber mit mehreren Gliedern, d. h. über eine Kette von gelenkig verbundenen Gliedern) gelenkig mit dem Ankupplungsteil verbunden. Die Gelenkanordnung umfasst an zumindest einem Glied der Gelenkanordnung einen erfindungsgemäßen Bewegungsdämpfer (um die Bewegung des betreffenden Glieds in sich und/oder relativ zu einem benachbarten Glied zu dämpfen bzw. zu bremsen), vorzugsweise (als zumindest ein Glied) den oben erwähnten Parallelogramm-Ausleger mit einem erfindungsgemäßen Bewegungsdämpfer. Alternativ oder zusätzlich können auch andere bewegliche Glieder der Gelenkanordnung in geeigneter Weise mit einem solchen Bewegungsdämpfer ausgestattet sein.

Durch die erfindungsgemäße Verwendung eines erfindungsgemäßen Bewegungsdämpfers, insbesondere eines Parallelogramm-Auslegers bzw. eines Gerätehalters, zum Halten eines Geräts kann die Position des Geräts im Raum relativ zu einem Bezugsobjekt, beispielsweise einer Wand, einem Tisch oder dem Boden vorzugsweise variabel einstellbar gehalten werden. Dabei kann mittels der Bremseinrichtung sehr einfach und sicher eine Justierung auf das Gewicht des zu haltenden Geräts erfolgen, d. h. der Gerätehalter ist in einem besonders weiten Nenn-Gewichtsbereich bzw. Gewichtskraftbereich oder Kraftbereich einstellbar. Auch eine Nachjustierung ist so einfach möglich. Bei dem zu haltenden Gerät kann es sich vorzugsweise um eine Benutzerschnittstelle handeln, wie eine Tastatur oder insbesondere eine - vorzugsweise elektrische - Anzeigevorrichtung (also einen Monitor), insbesondere auch eine mit einem Touchscreen ausgestattete Anzeigevorrichtung. Bei derartigen Geräten ist eine sichere Halterung an einer definierten Position besonders wichtig. Vor allem sollte die Position auch dann eingehalten werden, wenn der Benutzer das Gerät leicht berührt bzw. kräftemäßig belastet, wie z. B. beim Bedienen einer Tastatur oder eines Touchscreens.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Für die konkrete Ausgestaltung eines Bremssystems gibt es folgende Möglichkeiten.

Vorzugsweise weist das Bremssystem eine Bremsbackenanordnung mit, besonders bevorzugt zumindest zwei, Bremsbacken auf, die an verschiedenen, vorzugsweise im Wesentlichen gegenüberliegenden, Seiten der Kolbenstange an zumindest einem Abschnitt der Kolbenstange anliegen und gegen die Kolbenstange pressbar sind, um die Bewegung der Kolbenstange relativ zum Zylinder zu bremsen. Hierbei sind die Bremsbacken bevorzugt mit dem Zylinder in geeigneter Weise direkt oder indirekt fix, d. h. feststehend, gekoppelt. Die Bremsbacken können vorzugsweise auf einem Teilumfang, z. B. in etwa halbseitig, anliegen, so dass die beiden Bremsbacken eine um die Kolbenstange geschlossene Bremse ergeben.

Alternativ oder zusätzlich kann das Bremssystem auch zumindest zwei Bremsbacken aufweisen, die an verschiedenen, vorzugsweise im Wesentlichen gegenüberliegenden, Seiten des Zylinders an zumindest einem Abschnitt des Zylinders anliegen. Beispielsweise können sie an einem zur Kolbenstange weisenden Endabschnitt, vorzugsweise einem weiter unten noch näher erläuterten Ringabschnitt, anliegen und sich gegen den Abschnitt der Kolbenstange pressen lassen. Um damit die Bewegung der Kolbenstange relativ zum Zylinder zu bremsen, können die Bremsbacken in geeigneter Weise mit der Kolbenstange fix gekoppelt sein.

Besonders bevorzugt ist das Bremssystem an einem zur Kolbenstange weisenden Endabschnitt befestigt bzw. festgeklemmt. Das Bremssystem kann dabei wie z. B. zuvor erwähnt eine Bremsbackenanordnung mit Bremsbacken aufweisen, die gegen die aus dem Endabschnitt des Zylinders herausragende Kolbenstange pressbar sind. D. h. sie können beispielsweise auf eine Relativbewegung zwischen Kolbenstange und Zylinder wirken, indem sie die Kolbenstange greifen, wenn die Bremsbacken der Bremsbackenanordnung zusammenwirken.

Die Bremsbackenanordnung ist aber nicht auf zwei Bremsbacken beschränkt, sondern kann beispielsweise auch aus mehreren Teilen bestehen. Z. B. könnte die Bremsbackenanordnung zumindest vier Bremsbacken umfassen, die vorzugsweise untereinander verbunden sind. Dabei könnten zwei Bremsbacken aus zwei entgegengesetzten Richtungen auf die Kolbenstange wirken und zwei weitere Bremsbacken aus zwei senkrecht dazu orientierten, ebenfalls entgegengesetzten Richtungen auf den Zylinder wirken. Ein solches Bremssystem erzielt besonders gute Bremswerte, da die jeweils zwei Bremsbacken gleichzeitig auf die Bremsbacken der Bremsbackenanordnung einwirken.

Vorzugsweise weist das Bremssystem einen Betätigungsmechanismus auf, um die Bremsbacken der Bremsbackenanordnung gegen die Kolbenstange oder den Zylinder zu pressen. Dabei kann es sich beispielsweise um eine einfache Stellschraube handeln, mit welcher sich die Bremsbacken der Bremsbackenanordnung zusammenziehen bzw. feststellen lassen. Besonders bevorzugte Möglichkeiten zur Ausgestaltung eines Betätigungsmechanismus werden nachfolgend noch erläutert.

Bevorzugt weist die Bremsbackenanordnung zur Regulierung einer Bremskraft zusammenwirkende Befestigungselemente an den Bremsbacken auf. Mit dem oben erwähnten Betätigungsmechanismus können beispielsweise solche Befestigungselemente betätigt werden. Bei den Befestigungselementen kann es sich beispielsweise um Schrauben, wie z. B. Innensechskant-Schrauben, handeln, welche durch einfache Löcher in beiden Bremsbacken verlaufen und sich beispielsweise zusammen mit zugehörigen Muttern, wie z. B. entsprechend großen Sechskantmuttern, verschrauben lassen. Dadurch lässt sich bereits ausreichend genau die Bremskraft der Bremsbacken einstellen. Um die Einstellung der Bremskraft der Bremsbacken benutzerfreundlicher zu gestalten, kann auch nur ein Befestigungselement ausreichen, um die Bremskraft der Bremsbacken zu regulieren.

Vorzugsweise kann daher zumindest ein Befestigungselement eine Gewindestange umfassen, die an zumindest einer ersten Bremsbacke drehbar gelagert ist. Dabei kann sich zumindest eine zweite Bremsbacke zur Regulierung der Bremskraft der Bremsbackenanordnung vorzugsweise unter Klemmung der Kolbenstange zwischen den Bremsbacken an die erste Bremsbacke heranziehen lassen. Unter einer Gewindestange ist hier ein stangenähnlicher Körper bzw. eine Stange mit mindestens einem Gewindeabschnitt zu verstehen.

Alternativ oder zusätzlich zu den oben erwähnten Muttern kann z. B. die zweite Bremsbacke vorzugsweise auch direkt mit einem Innengewinde, beispielsweise in den oben erwähnten einfachen runden Löchern, ausgebildet sein.

Vorzugsweise kann das Innengewinde aber in einer zur zweiten Bremsbacke zugeordneten Rechteckmutter angeordnet sein, so dass sich die zweite Bremsbacke, besonders bevorzugt die Rechteckmutter zusammen mit der zweiten Bremsbacke relativ zur ersten Bremsbacke festziehen lässt. Besonders bevorzugt kann eine Rechteckmutter bzw. "Trapezmutter" barrenförmig - d. h. mit einem Quader mit rechteckiger Grundfläche, rechteckiger Kopffläche und trapezförmigen Seitenflächen - ausgebildet sein und sich vorwiegend in Längsrichtung der zweiten Bremsbacke erstrecken. Dadurch kann sie ganz besonders bevorzugt zumindest zwei Innengewinde für voneinander in Längsrichtung beabstandete Schrauben aufweisen, um eine gleichmäßige "Anzugskraft" über die Längserstreckung der Bremsbacken zu erreichen. Eine solche gleichmäßige Verteilung der Anzugskraft entlang einer längeren Kontaktfläche zwischen Bremsbacken und Kolbenstange sorgt für eine verbesserte Bremswirkung des Bremssystems.

Weiterhin können die Bremsbacken vorzugsweise jeweils zumindest eine in Längsrichtung der Kolbenstange verlaufende konkave Ausnehmung, also beispielsweise eine Vertiefung in Form eines Halbzylinders, zur Aufnahme der Kolbenstange aufweisen. Wenn die Kolbenstange wie üblich einen runden Querschnitt aufweist bzw. im Querschnitt konvex ausgebildet ist, kann somit mittels der konkaven Ausnehmung der Bremsbacken eine vergrößerte Kontaktfläche zur Kolbenstange erreicht werden.

In der Ausnehmung können vorzugsweise mehrere in Längsrichtung der Kolbenstange voneinander beabstandete, beispielsweise längs und/oder quer verlaufende, Verzahnungselemente - z. B. zur Fixierung von noch nachfolgend erwähnten Bremseinsätzen - angeordnet sein. Sie können vorzugsweise relativ zum tiefsten Punkt der Oberfläche der konkaven Ausnehmung weiter vertieft verlaufen, so dass eine verbesserte Verzahnung zwischen den Bremseinsätzen und den Bremsbacken erfolgen kann, damit sich eine Bremsbacke und ein ihr zugeordneter Bremseinsatz aufgrund der Bremsreibung nicht relativ zueinander bewegen können. Solche Verzahnungselemente können vorzugsweise Verzahnungsrillen bzw. Verzahnungsnuten sein, beispielsweise in Form von einfachen Längsnuten, Quernuten oder auch schräg verlaufenden Nuten. Ebenso können Verzahnungselemente auch Verzahnungslöcher bilden, die vorzugsweise relativ zur konkaven Ausnehmung vertieft sind. Besonders bevorzugt können sie als Senklöcher, ganz besonders bevorzugt als durchgängig durch die Bremsbacken verlaufende Löcher ausgebildet sein.

Wie zuvor erwähnt können die Bremsbacken zumindest einen Bremseinsatz umfassen, der vorzugsweise innenseitig in der konkaven Ausnehmung vorzugsweise zwischen zumindest einer der Bremsbacken und zumindest einer Kontaktfläche zur Kolbenstange angeordnet ist. Ein solcher Bremseinsatz dient in erster Linie dazu, die Bremswirkung bzw. Bremskraft des Bremssystems zwischen den sich berührenden Komponenten zu erhöhen. Hierzu ist der Bremseinsatz vorzugsweise so ausgebildet, dass die Reibungskraft zwischen dem Bremseinsatz und dem zu bremsenden Teil, gegen den der Bremseinsatz gedrückt wird, möglichst hoch ist.

Beispielsweise kann der Bremseinsatz hierzu vorzugsweise mit einem TPU-Material gefertigt sein. Besonders bevorzugt kann er auch so ausgebildet sein, dass er eine aufgeraute Oberfläche besitzt.

Da das TPU-Material und die raue Oberfläche für eine erhöhte Reibung sorgen, erhöht sich die Bremskraft des Bremssystems, wodurch das Bremssystem vorteilhafterweise bei gleicher Einstellkraft zusätzliches Gewicht bremsen kann.

Vorzugsweise umfasst der Bremseinsatz zumindest ein Gegenverzahnungselement, welches mit zumindest einem oben erwähnten Verzahnungselement in der Ausnehmung zusammenwirkt. Beispielsweise kann das Gegenverzahnungselement so ausgebildet sein, dass es sich in eines der Verzahnungselemente einsetzen lässt und darin einrastet bzw. greift, so dass der Bremseinsatz relativ zu dieser Bremsbacke bei einer Relativbewegung zur anderen Bremsbacke bzw. zur Kolbenstange gehalten wird.

Ein solches bzw. mehrere solche Gegenverzahnungselemente können beispielsweise Verzahnungsstege sein, die in die oben beschriebenen Verzahnungsrillen greifen. Ebenso können Gegenverzahnungselemente auch Verzahnungszapfen meinen, die vorzugsweise in die oben erwähnten Verzahnungslöcher passen.

Um eine besonders gute Passung an einer runden Kolbenstange bzw. einem runden Zylinder zu erzielen, kann ein Bremseinsatz vorzugsweise eine konkave Seite und eine konvexe Seite aufweisen, d. h. beispielsweise halbmondförmig im Querschnitt senkrecht zur Längsrichtung. Dabei befinden sich die Gegenverzahnungselemente besonders bevorzugt auf der konvexen Seite des Bremseinsatzes, die nicht in Kontakt mit der Kolbenstange oder dem Zylinder steht.

Ganz besonders bevorzugt ist die Form und Anzahl an Verzahnungselementen und Gegenverzahnungselementen exakt aufeinander abgestimmt, so dass sie jeweils ineinander formschlüssig einrasten, womit eine Relativbewegung zwischen einer Bremsbacke und einem zugeordneten Bremseinsatz verhindert werden kann.

Eine feststehende, fixe Kopplung von Bremsbacken mit dem jeweiligen Teil des Bewegungsdämpfers ist auf verschiedene Weise möglich.

Vorzugsweise können die Bremsbacken an einem zylinderseitigen Ende mit dem zur Kolbenstange weisenden Endabschnitt des Zylinders formschlüssig gekoppelt sein. Der zur Kolbenstange weisende Endabschnitt kann dazu vorzugsweise einen relativ zur übrigen Oberfläche des Zylinders erhöhten Ringabschnitt bilden. Bei dem Ringabschnitt handelt es sich um eine Auskragung an der Oberfläche des Zylinders (Zylinderoberfläche) nach Art eines Flansches, so dass dieser Ringabschnitt auch als "Ringflansch" bezeichnet werden kann. Vorzugsweise weisen die Bremsbacken jeweils eine Befestigungsnut auf, in die der Ringabschnitt des Zylinders formschlüssig eingreift, um eine Relativbewegung in Längsrichtung zwischen Bremsbacken und Zylinder zu verhindern.

Für die Kopplung des Bewegungsdämpfers mit beweglichen Gliedern der Gelenkanordnung kann die Kolbenstange vorzugsweise an einem zylinderfernen, freien Ende eine Befestigungslasche bzw. Öse aufweisen. Sie kann mittels einer Schraubverbindung - nach dem Einsetzen der Kolbenstange im Zylinder - an der Kolbenstange montiert werden. Besonders bevorzugt kann auch der Zylinder an einer kolbenstangenfernen Seite eine Befestigungslasche aufweisen.

Beispielsweise lässt sich dadurch der Bewegungsdämpfer besonders einfach - also z. B. an einer Seite mit der Befestigungslasche der Kolbenstange an einem Gelenk und an der gegenüberliegenden Seite mit der Befestigungslasche des Zylinders an einem gegenüberliegenden, vorzugsweise diagonal gegenüberliegenden Gelenk - auf geeignete Weise mit dem bereits oben erwähnten Parallelogramm-Ausleger koppeln. Insbesondere könnten die Befestigungslaschen an zwei diagonalen Gelenken der vier Gelenke des Doppelarms des oben erwähnten Parallelogramm-Auslegers angeordnet werden.

Für die Ausgestaltung des oben erwähnten Parallelogramm-Auslegers gibt es unterschiedliche Möglichkeiten.

Vorzugsweise können die Längsstreben des Doppelarms des oben erwähnten Parallelogramm-Auslegers quer zur Längsrichtung verlaufende Bohrungen bzw. jeweils eine Art "Befestigungslasche" - wie dies auf ähnliche Weise bei der Kolbenstange und dem Zylinder des Bewegungsdämpfers vorzugsweise der Fall ist - an den weiter voneinander entfernten Endabschnitten der Längsstreben aufweisen. Mit diesen Bohrungen können die Längsstreben besonders einfach zusammen mit jeweils einem später näher erläuterten Verbindungsbolzen als Gelenk mit den Querstreben beweglich verbunden werden.

Vorzugsweise können die Querstreben aus zwei baugleichen, jedoch entgegengesetzt zueinander angeordneten, zylinderförmigen Drehzapfen bestehen, die jeweils zwei durchgängige, senkrecht zur Längsrichtung verlaufende (Achslager-)Löcher in den Drehzapfen umfassen. In diesen (Achslager-)Löchern kann beispielsweise jeweils einer der genannten Verbindungsbolzen angeordnet sein, der dann - jeweils durch die besagten Bohrungen in den Längsstreben - die Längsstreben unter Bildung eines Parallelogramms gelenkig relativ zu den Querstreben verbindet bzw. lagert.

Die (Achslager-)Löcher können beispielsweise nebeneinander auf einer Höhe in Längsrichtung der Drehzapfen angeordnet sein, wobei dabei die Längsstreben ebenfalls nebeneinander verlaufen. Vorzugsweise können die (Achslager-)Löcher übereinander angeordnet sein, d. h. in Längsrichtung der Drehzapfen voneinander beabstandet sein.

Die Gelenke bzw. gelenkigen Verbindungen zwischen den Längsstreben und den Querstreben können dann jeweils einfach realisiert sein, indem durch die oben erwähnten Bohrungen in den Längsstreben und den (Achslager-)Löchern in den Querstreben des Doppelarms des Parallelogramm-Auslegers jeweils ein Verbindungsbolzen, beispielsweise ein einfacher Stahlbolzen, verläuft. Die drehbare Lagerung der Längsstreben um die in den Drehzapfen befindlichen, senkrecht zu den Drehzapfen verlaufenden Verbindungsbolzen sorgt hierbei dafür, dass sich der Parallelogramm-Ausleger, insbesondere ein durch den Gerätehalter zu haltender Monitor, heben oder senken lässt. Gleichzeitig sorgen die zueinander parallel verlaufenden, um die Verbindungsbolzen drehbar gelagerten Längsstreben dafür, dass die Drehzapfen aufgrund der geometrischen Eigenschaften eines Parallelogramms stets in einer parallelen Position zueinander gehalten werden können. Ist also dafür gesorgt, dass ein erster Drehzapfen des Parallelogramm-Auslegers vertikal steht, da er passend an einem Bezugsobjekt, z. B. einem Tisch, montiert wurde, so kann auch dafür gesorgt werden, dass zumindest das Ankupplungsteil des Gerätehalters, insbesondere der zu haltende Monitor am Ankupplungsteil des Gerätehalters, bei einer Verstellung des Parallelogramm-Auslegers stets in einer gleichbleibenden Winkelstellung, z. B. vertikalen bzw. aufrechten Position, gehalten werden kann.

Weiter können die Drehzapfen bzw. Querstreben vorzugsweise jeweils in einem "Drehlager" drehbar gelagert angeordnet sein. Ein solches Drehlager kann vorzugsweise aus einer Hülse und einem entsprechenden, darin drehbaren Zapfen gebildet werden. Besonders bevorzugt kann der hülsenförmige Teil des Drehlagers exakt auf einen oben erwähnten Drehzapfen abgestimmt sein. Grundsätzlich könnte diese Hülse des Drehlagers auch ein Teil des Parallelogramm-Auslegers sein, wenn ein entsprechender Drehzapfen dann Teil eines daran anzukoppelnden Elements ist, wie z.B. eines Ankupplungsteils und/oder eines Basisteils des Gerätehalters. Bevorzugt handelt es sich hierbei allerdings bei der Hülse des Drehlagers um ein Teil des Ankupplungsteils und/oder des Basisteils des oben erwähnten Gerätehalters, um das Ankupplungsteil bzw. das Basisteil beispielsweise relativ zu einem darin formschlüssig gekoppelten Parallelogramm-Ausleger mit zumindest einem entsprechenden Drehzapfen in einer horizontalen Ebene parallel zum Boden drehen zu können. Dies wird später noch anhand eines Beispiels genauer erläutert.

Außerdem kann das Bremssystem des Bewegungsdämpfers des Parallelogramm-Auslegers zumindest einen Bremsknopf als Teil des Betätigungsmechanismus aufweisen. Unter einem Bremsknopf ist hier beispielsweise ein Drehknopf zur Einstellung der Bremskraft des Bremssystems gemeint, welcher zumindest eine Art "Griff" zum Greifen, z. B. einen Stern- oder Rundgriff, und eine Schnittstelle - z. B. eine Innensechskant-Aussparung - zur Kopplung mit dem übrigen Betätigungsmechanismus aufweist. Dabei kann zumindest der Bremsknopf, vorzugsweise sichtbar und möglichst bedienungsfreundlich, aus einem Gehäuse bzw. einer Verkleidung, insbesondere einem Verkleidungselement, des Parallelogramm-Auslegers hinausragen bzw. außenseitig angeordnet sein. Dies bringt u. a. folgende Vorteile mit sich: Zum einen kann der übrige eigentliche Betätigungsmechanismus so aus designerischen Gründen versteckt werden. Zum anderen lässt sich dennoch der eigentliche Teil des Betätigungsmechanismus praktisch und benutzerfreundlich betätigen.

Auch für die sonstige Ausgestaltung des oben erwähnten Gerätehalters, insbesondere der Gelenkanordnung des Gerätehalters, gibt es unterschiedliche Möglichkeiten.

Wie bereits oben erwähnt kann die Gelenkanordnung des Gerätehalters vorzugsweise mehrere Glieder umfassen. Als ein weiteres Glied, z. B. zusätzlich zum Parallelogramm-Ausleger, kann sie bevorzugt einen Linear-Ausleger mit zumindest einem länglichen, starren Arm aufweisen. Vorzugsweise können dabei die beiden Endabschnitte des starren Arms so ausgebildet sein, dass sie sich jeweils mit dem anderen Teil des Drehlagers des ersten Glieds der Gelenkanordnung bzw. weiterer nachfolgender Glieder drehbar verbinden lassen. Das Drehlager kann hierzu z. B. durch eine passgenaue drehbare Lagerung des zylinderförmigen Drehzapfens des Parallelogramm-Auslegers - wie er oben erwähnt ist - in einem hülsenförmigen Hohlzylinder des Linear-Auslegers gebildet werden.

Es können aber beispielsweise auch Drehlager der Gelenkanordnung als separate Zwischenstücke den betreffenden Gliedern der Gelenkanordnung zwischengeschaltet sein. "Zwischengeschaltet" meint hier, dass die Drehlager eine Art Adapter bilden, um beispielsweise das Ankupplungsteil mit dem Parallelogramm-Ausleger oder direkt mit dem Basisteil drehbar zu koppeln.

Vorzugsweise können aber, wie vorher beschrieben, die zu verbindenden Glieder allerdings jeweils zueinander gegensätzliche, zusammenwirkende Drehlagerteile aufweisen. Beispielsweise können ein erstes Teil des Drehlagers an einem ersten Glied und ein zweites, damit zusammenwirkendes komplementäres Teil des Drehlagers am zugehörigen zweiten Glied der Gelenkanordnung ausgebildet sein. Die Glieder der Gelenkanordnung können endseitig so passend zueinander ausgebildet sein, dass die zueinander komplementären Drehlagerteile zur gelenkigen Kopplung des Basisteils, unterschiedlicher Glieder und des Ankupplungsteils für das Gerät miteinander in einem modularen Aufbau möglich sind. D. h. dass zum Beispiel auch das Basisteil direkt mit dem Ankupplungsteil gekoppelt werden kann.

Besonders bevorzugt kann der Parallelogramm-Ausleger endseitig jeweils ein zu einem zweiten Drehlagerteil des nächsten Glieds gegensätzliches "erstes Drehlagerteil" aufweisen. Z. B. kann der Parallelogramm-Ausleger mit einem, zumindest ein solches zweites Drehlagerteil aufweisenden, Linear-Ausleger gekoppelt sein. Ganz besonders bevorzugt kann das andere, am anderen Ende des Arms befindliche, zweite Drehlagerteil des Linear-Auslegers dabei wieder mit dem Basisteil des Gerätehalters gekoppelt sein. Wie oben erwähnt kann zugleich das freie, vom Arm des Linear-Auslegers wegweisende Ende des Parallelogramm-Auslegers vorzugsweise mit dem Ankupplungsteil des Gerätehalters zur Aufnahme eines Monitors gekoppelt sein.

Ein solcher gelenkig verbundener Gerätehalter mit einem Ankupplungsteil für einen Monitor, einem Parallelogramm-Ausleger, einem Linear-Ausleger und einem Basisteil kann daher in unterschiedliche Positionen relativ zu einem fixen Bezugsobjekt, an dem das Basisteil angeordnet ist, verfahren und dabei gehalten werden. Der Linear-Ausleger sorgt u. a. für eine horizontale Verlängerung. D. h. es kann z. B. ein Abstand zwischen Benutzer und Basisteil damit überbrückt werden. Wie bereits oben erwähnt, dient dann der Parallelogramm-Ausleger zusätzlich zur Höhenverstellung des Monitors.

Da die einzelnen Glieder jeweils gelenkig verbunden sind, lassen sich sämtliche Glieder relativ zueinander im Wesentlichen beliebig bewegen. Damit eine Kollision der Glieder der Gelenkanordnung, insbesondere eines oder mehrerer zu haltender Monitore vermieden wird, können zumindest einzelne Gelenke der Gelenkanordnung vorzugsweise auf bestimmte Winkelbereiche beschränkt sein. Z. B. können die verbindenden Drehlager zwischen Basisteil und Linear-Ausleger auf einen maximal zulässigen Drehwinkel, z. B. einen 180°-Drehwinkel, in der Horizontalen durch Anschläge am ersten und/oder zweiten Drehlager geeignet beschränkt sein, wenn das Basisteil beispielsweise an einer Wand oder einem Tisch befestigt ist, wie nachfolgend noch erläutert wird.

Vorzugsweise ist das Basisteil des Gerätehalters als eine "Anordnungsvorrichtung" ausgebildet, um den Gerätehalter an unterschiedlichen Bezugsobjekten montieren zu können. Besonders bevorzugt kann mittels einer Fixierung an einem betreffenden Bezugsobjekt das Basisteil des Gerätehalters in unterschiedlichen Positionen relativ zu diesem Bezugsobjekt gehalten werden. Vorzugsweise kann der Gerätehalter - zumindest werksseitig, aber auch durch einen Monteur oder einen Benutzer vor Ort - mit unterschiedlichen Basisteilen ausgestattet werden. Sie können jeweils zur Kopplung mit einem nächsten Glied der Gelenkanordnung eine identische Schnittstelle, z. B. das erwähnte Drehlagerteil (beispielsweise die Hülse) aufweisen, aber eine verschiedene, jeweils zur Kopplung an das gewünschte Bezugsobjekt - beispielsweise einen Tisch, eine Wand, einen Boden oder dergleichen - angepasste Schnittstelle aufweisen. D. h. das Basisteil kann als Wandhalterung, als Bodenständer, als Tischklemme oder dergleichen ausgebildet sein oder auch mit einer Tischklemme koppelbar sein.

Eine solche Tischklemme kann beispielsweise zwei parallel zueinander angeordnete, horizontal (d. h. parallel zum Boden) ausgerichtete Plattenelemente umfassen, die jeweils an einer Kante senkrecht dazu, d. h. vertikal verbunden sind. Dabei könnte sich zur Befestigung des Gerätehalters z. B. in einer horizontalen Flachseite einer der horizontalen Plattenelemente eine vertikal ausgerichtete Stellschraube befinden, welche eine Tischplatte bzw. Tischkante zwischen sich und der anderen Platte festklemmen kann.

Die Erfindung wird im Folgenden unter Hinweis auf die beigefügten Figuren anhand eines Ausführungsbeispiels noch einmal näher erläutert. Dabei sind in den verschiedenen Figuren gleiche Komponenten mit identischen Bezugsziffern versehen. Es zeigen:
Figur 1 eine perspektivische Rückansicht auf einen Monitor, welcher durch ein bevorzugtes Ausführungsbeispiel eines erfindungsgemäßen Gerätehalters gehalten wird,
Figur 2 eine perspektivische Ansicht von vorne (ohne Monitor) auf den Gerätehalter nach Figur 1,
Figur 3 eine perspektivische Teilansicht eines bevorzugten Ausführungsbeispiels eines erfindungsgemäßen Parallelogramm-Auslegers des Gerätehalters nach den Figuren 1 und 2, mit teilweise entfernter Verkleidung zur Darstellung eines Ausführungsbeispiels einer erfindungsgemäßen Gasdruckfeder im Parallelogramm-Ausleger,
Figur 4 eine perspektivische Sprengzeichnung des Ausführungsbeispiels einer erfindungsgemäßen Gasdruckfeder nach Figur 3,
Figur 5 eine andere Perspektive der Sprengzeichnung der Gasdruckfeder nach Figur 4,
Figur 6 eine perspektivische Ansicht der Gasdruckfeder nach den Figuren 3 bis 5 im zusammengesetzten Zustand.

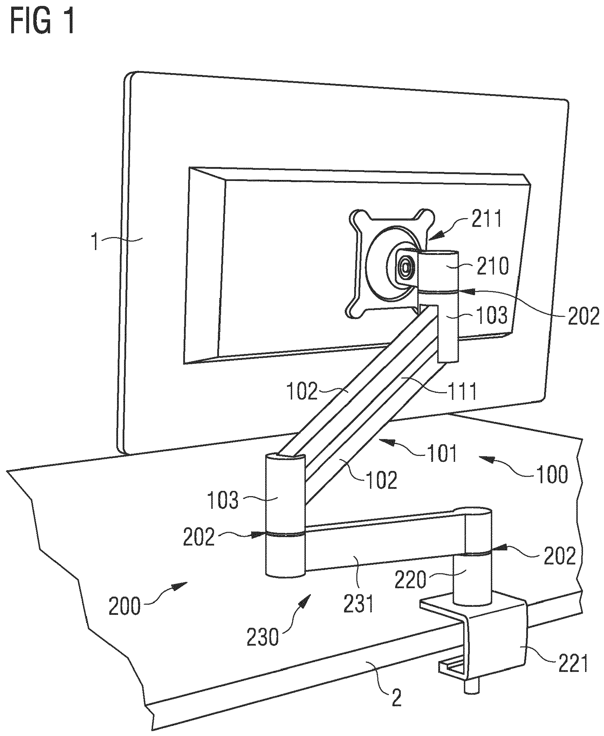

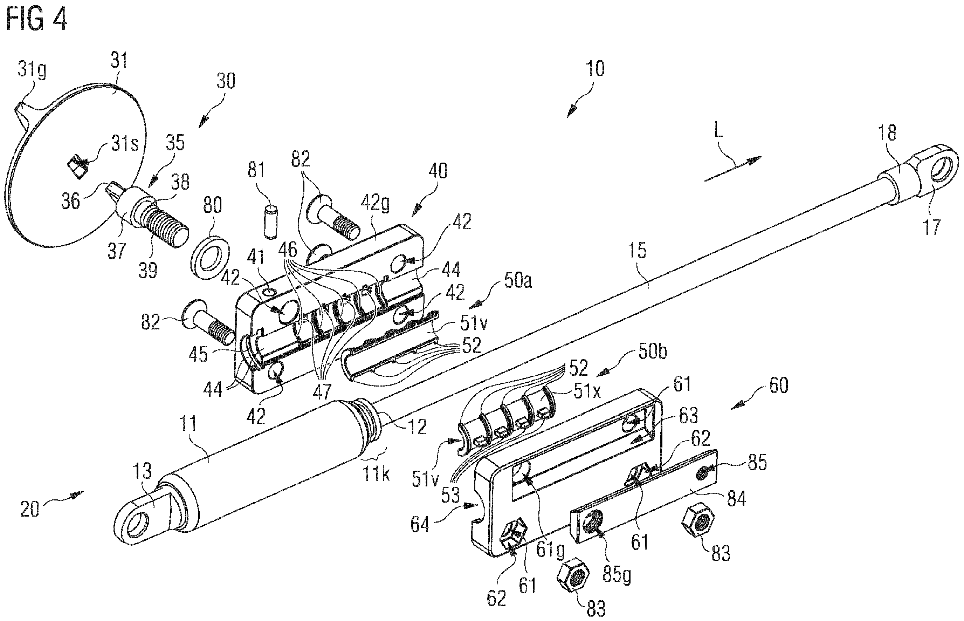

Anhand der Figuren 1 bis 3 wird zunächst ein besonders bevorzugtes Ausführungsbeispiel eines erfindungsgemäßen Gerätehalters 200 mit einem erfindungsgemäßen Parallelogramm-Ausleger 100 beschrieben, welcher ein Glied des Gerätehalters 200 bilden kann. In diesem Parallelogramm-Ausleger 100 (als Teil desselben) ist ein erfindungsgemäßer Bewegungsdämpfer 10, hier konkret eine Gasdruckfeder 10, wie sie in Figur 4 bis 6 dargestellt ist, diagonal angeordnet, wie weiter unten noch erläutert wird. In dem dargestellten Ausführungsbeispiel wird von einer Gasdruckfeder 10 ausgegangen, da diese bei dem konkreten Einsatz in einem Gerätehalter meist ausreicht und daher aus Kostengründen bevorzugt ist. Dies soll jedoch nicht beschränkend wirken. Alternativ können beispielsweise auch hydraulische Dämpfer eingesetzt werden, wenn dadurch z. B. schwerere Geräte bzw. Lasten gehalten werden sollen, also z. B. um die Nenn-Gewichtskraft des Gerätehalters zu erhöhen. Die in den Figuren dargestellte Gasdruckfeder könnte dabei einfach durch einen hydraulischen Dämpfer ersetzt werden, wobei gegebenenfalls nur geringfügige Modifikationen zur Anpassung der weiteren Komponenten vorgenommen werden können, ohne dass das Prinzip geändert werden muss.

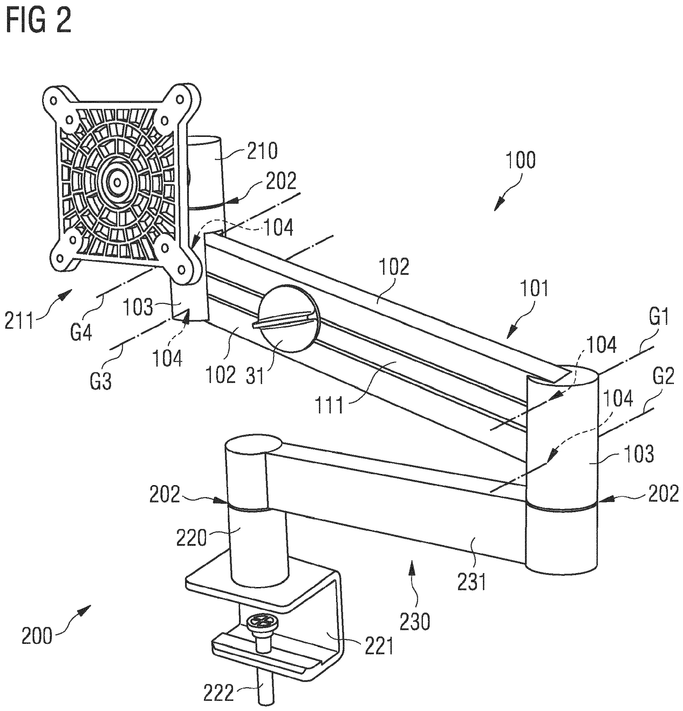

Wie aus den Figuren 1 und 2 hervorgeht, gehören hier neben dem zuvor erwähnten Parallelogramm-Ausleger 100 zu den Hauptkomponenten dieses Gerätehalters 200 ein Linear-Ausleger 230 mit einem länglichen starren Arm 231, ein Ankupplungsteil 210, welches einen Adapter nach VESA-Norm bzw. eine VESA-Halterung 211 für einen Monitor 1 umfasst, sowie ein Basisteil 220, welches eine Tischklemme 221 als Anordnungsvorrichtung aufweist, um den Gerätehalter 200 insgesamt wie in Figur 1 gezeigt an einer Tischplatte 2 zu montieren.

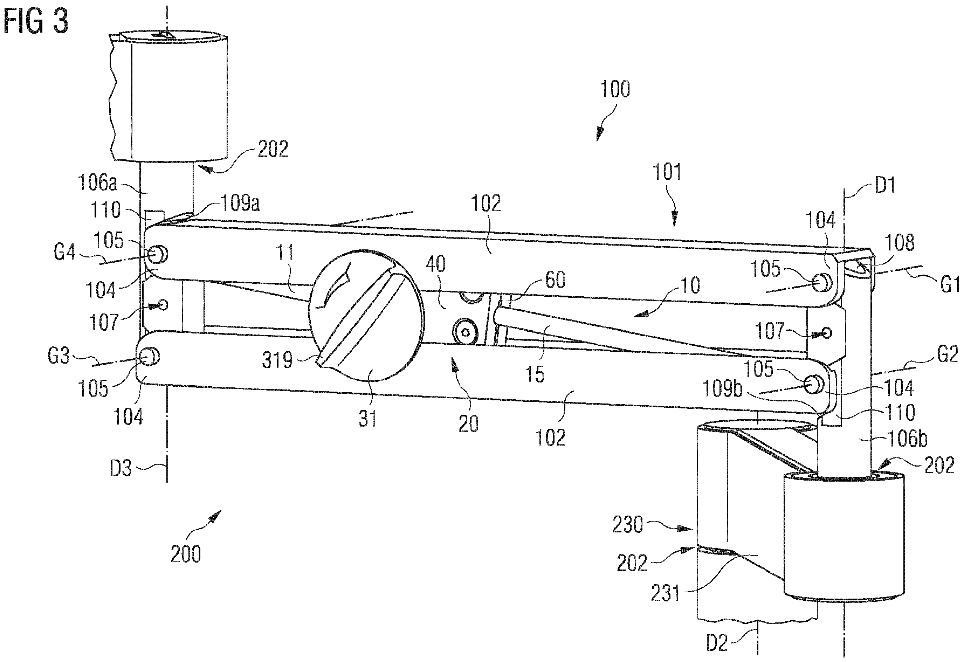

Der hier gezeigte, durch den Gerätehalter 200 gehaltene Monitor 1 - ebenso wie die Tischplatte 2 als Bezugsobjekt - gehören nicht zur Erfindung, sondern sind nur zu Anschauungszwecken dargestellt. Sämtliche Hauptkomponenten sind dabei jeweils über ein Drehlager 202 miteinander verbunden und drehbar, d. h. um eine jeweils vertikal ausgerichtete Drehlagerachse D1, D2, D3 des betreffenden Drehlagers 202, zueinander gelagert, wie dies anhand von Figur 3 in einem Ausschnitt mit Fokus auf das ParallelogrammGelenk bzw. den Parallelogramm-Ausleger 100 des Gerätehalters 200 gezeigt ist.

Der Parallelogramm-Ausleger 100 des Gerätehalters 200 dient dazu, Bewegungen des gehaltenen Geräts 1, hier des Monitors 1, in einer Vertikalrichtung, also nach oben bzw. unten, relativ zum Basisteil 220 zu ermöglichen. Relative Richtungsangaben wie "oben", "unten", "innenseitig", "außenseitig", "vorderseitig", "rückseitig", "längsseitig" etc. beziehen sich hier willkürlich auf die Darstellung in den Figuren.

Der Parallelogramm-Ausleger 100 weist hierzu einen Doppelarm 101 mit zwei voneinander beabstandeten Längsstreben 102 und zwei die Längsstreben 102 endseitig gelenkig verbindende, wesentlich kürzere Querstreben 103 auf. Zusammen bilden die Längsstreben 102 und die Querstreben 103 dabei ein Parallelogramm.

Wie in Figur 3 zu sehen ist, sind die Längsstreben 102 als längliche U-Profilschienen ausgebildet. Sie sind voneinander beabstandet angeordnet und weisen jeweils mit der offenen Längsseite der U-Profilschienen zueinander. Dadurch ist zwischen den Längsstreben 102 bzw. U-Profilschienen 102 ein Innenraum ausgebildet, in dem eine Gasdruckfeder 10 des Parallelogramm-Auslegers 100 untergebracht ist. Dies ist in Figur 3 gezeigt.

In Endabschnitten der hier in Figur 3 vertikal verlaufenden Schenkelseiten der U-Profilschienen befinden sich parallel zur U-Grundseite der U-Profilschienen durch beide Schenkelseiten durchgängig verlaufende Löcher, die jeweils, wie unten erläutert wird, einen Verbindungsbolzen 105 aufnehmen. Die Längsstreben 102 sind außerdem endseitig im Bereich um diese Löcher an den Endabschnitten an den Ecken abgerundet.

Die vertikalen Querstreben 106a, 106b sind hier jeweils als längliche, im Wesentlichen zylinderförmige Drehzapfen 106a, 106b ausgebildet, die an entsprechende Anschlusstücke (hier Hohlzylinder) der sich an den Parallelogramm-Ausleger 100 anschließenden Glieder des Gerätehalters 200, hier unten der Linear-Ausleger 230 und oben das Ankupplungsteil 210 gekoppelt sind und so die Drehlager 202 zur Drehung der Glieder relativ zueinander um die jeweilige Drehlagerachse D1, D3 bilden.

Die Drehzapfen 106a, 106b weisen jeweils zwei voneinander beabstandete, quer durch ihre Längsrichtung verlaufende (hier nicht zu erkennende) (Achslager-)Löcher auf, welche die o. g. Verbindungsbolzen 105 zur gelenkigen Verbindung mit den Längsstreben 102 bzw. U-Profilschienen aufnehmen. Eines der (Achslager-)Löcher befindet sich jeweils an einem Ende, das andere Loch im Wesentlichen mittig in Längsrichtung der Drehzapfen 106a, 106b.

Wie aus Figur 3 gut zu erkennen ist, sind also die Längsstreben 102 jeweils beidseitig über ein Gelenk 104 mit einer der Querstreben 106a, 106b drehbar gekoppelt, welche jeweils durch einen der Drehzapfen 106a, 106b gebildet werden. Die vier Gelenke 104 zwischen den beiden Drehzapfen 106a, 106b und den beiden Längsstreben 102 des Doppelarms 101 werden dabei jeweils durch den oben genannten Verbindungsbolzen 105 erzeugt, der durch die erwähnten (Achslager-)Löcher in den beiden Komponenten verläuft und die Komponenten drehbar miteinander verbindet. In Längsrichtung der vier Verbindungsbolzen 105 ist so jeweils eine Gelenkachse G1, G2, G3, G4 definiert, um die sich die Längsstreben 102 relativ zu den Drehzapfen 106a, 106b drehen lassen, wodurch die gewünschte Parallelogramm-Mechanik erreicht wird.

Zwischen den beiden (Achslager-)Löchern ist in den Drehzapfen 106a, 106b jeweils ein weiteres durchgängiges Loch 107 zur beidseitigen Befestigung jeweils einer Blende 111 zwischen den Längsstreben 102 angeordnet. Diese Blenden 111 sind als Teil der Verkleidung in Figur 1 in der Vorderansicht und in Figur 2 in der Rückansicht gezeigt. In diesen Figuren ist auch zu sehen, dass die Drehzapfen 106a, 106b jeweils durch Querstreben-Abdeckungen 103 in Form von geschlitzten Abdeckhülsen 103 als äußere Verkleidung abgedeckt sind. Aus dem Schlitz der Abdeckhülsen 103 ragen dann jeweils die Längsstreben 102 heraus.

Ein erster, obenseitiger Drehzapfen 106a zeigt mit seinem von den (Achslager-)Löchern wegweisenden Ende nach oben (in Figur 3 oben links dargestellt) und ist dabei wie zuvor erwähnt unter Bildung eines Drehlagers 202 um eine vertikale Drehlagerachse D3 in einem Hohlzylinder im Ankupplungsteil 210 drehbar gelagert. Der baugleiche, untenseitige Drehzapfen 106b ist umgekehrt angeordnet und ist (in Figur 3 unten rechts gezeigt) zur Bildung eines Drehlagers 202 um eine vertikale Drehlagerachse D1 drehbar in einem Hohlzylinder im Linear-Ausleger 230 gelagert.

Ein Abschnitt der zylinderförmigen Drehzapfen 106a, 106b, der sich in Längsrichtung des Drehzapfens 106a, 106b über die zuvor erwähnten (Achslager-)Löcher hinweg erstreckt, besitzt einen Querschnitt mit zwei fehlenden Kreissegmenten. Diese ausgesparten Kreissegmente liegen einander gegenüber und sorgen für eine Abflachung 110, also einen im Bereich um die (Achslager-)Löcher abgeflachten Querschnitt der Drehzapfen 106a, 106b, an welche ausgesparten Kreissegmente sich jeweils die Endabschnitte der Schenkelseiten der Längsstreben 102 bzw. U-Profilschienen flächig anschmiegen.

Entsprechend zu den abgerundeten Endabschnitten der Längsstreben 102 besitzen auch die Drehzapfen 106a, 106b um den Bereich der (in Figur 3 nicht sichtbaren) (Achslager-)Löcher jeweils eine Einkerbung 109a, 109b, die Platz zur Parallelogramm-Relativbewegung der zugehörigen Längsstrebe 102 am jeweiligen Drehzapfen 106a, 106b schafft.

Weiterhin besitzen die Drehzapfen 106a, 106b an den drehlagerabgewandten Stirnseiten Abrundungen bzw. Abschrägungen 108, welche ebenfalls Raum für eine Verstellung der Längsstreben 102 relativ zu den Drehzapfen 106a, 106b schaffen. Die Abrundungen bzw. Abschrägungen 108 sind hier in Figur 3 nur bei dem mit dem Linear-Ausleger 230 verbundenen Drehzapfen 106b sichtbar.

Mittels der zuvor beschriebenen Gelenkanordnung 201 des Gerätehalters 200 lässt sich durch eine parallele Drehung der Längsstreben 102 des Doppelarms 101 um die Gelenkachsen G1, G2, G3, G4 ein Drehzapfen 106a des Parallelogramm-Auslegers 100 relativ zum anderen Drehzapfen 106b nach oben bzw. unten bewegen. Gleichbedeutend bewegt sich bzw. schwenkt also ein solcher Monitor 1 in eine Raumrichtung nach oben bzw. unten. Zugleich sorgen die zahlreichen Drehlager 202, z. B. die Drehlager 202 des Linear-Auslegers 230 der Gelenkanordnung 201, dafür, dass sich der Monitor 1 auch in einer horizontalen Ebene drehen bzw. verfahren lässt.

Dabei wird durch eine Gasdruckfeder 10 im Parallelogramm-Ausleger 100 dafür gesorgt, dass der durch den beschriebenen Gerätehalter 200 zu haltende Monitor 1 an einer gewünschten Position angeordnet werden kann und sich nicht ohne äußere Kraft von selbst nach unten bewegt.

Diese Gasdruckfeder 10 ist in dem in Figur 3 gezeigten, betriebsbereit fertig montierten Zustand diagonal zwischen den Gelenkachsen G2, G4 des Parallelogramm-Auslegers 100 angeordnet und jeweils endseitig in diesen Gelenkachsen G2, G4 mit den Verbindungsbolzen 105 gekoppelt. Die Gasdruckfeder 10 weist erfindungsgemäß ein Bremssystem 20 auf, mit dem die Bremskraft bzw. Dämpfungskraft der Gasdruckfeder 10 einstellbar ist. Zur Justierung des Bremssystems 20 weist dieses als Bedienelement einen Bremsknopf 31 auf, der seitlich am Gehäuse des Parallelogramm-Auslegers 100 angeordnet ist (siehe Figuren 2 und 3).

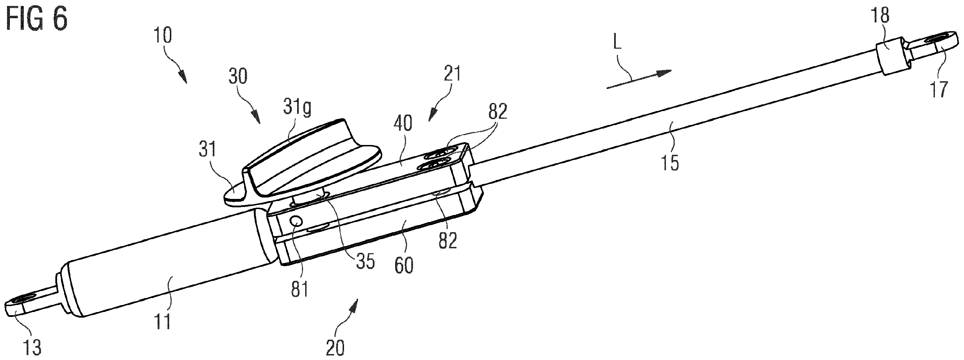

In der in Figur 2 dargestellten Vorderansicht auf den Parallelogramm-Ausleger 100 ist vom Bremssystem 20 nur dieser im Wesentlichen runde Bremsknopf 31 gezeigt. Er ist über eine Gewindestange 35 (siehe Figur 6) mit der Gasdruckfeder 10 des Bremssystems gekoppelt. Die Gewindestange 35 verläuft dabei durch ein hier durch den Bremsknopf 31 selbst verdecktes Loch, das sich in einer vorderseitigen Blende 111 zwischen den Längsstreben 102 des Doppelarms 101 befindet.

Anhand der Figuren 4 bis 6 wird nun dieses bevorzugte Ausführungsbeispiel der erfindungsgemäßen Gasdruckfeder 10 beschrieben.

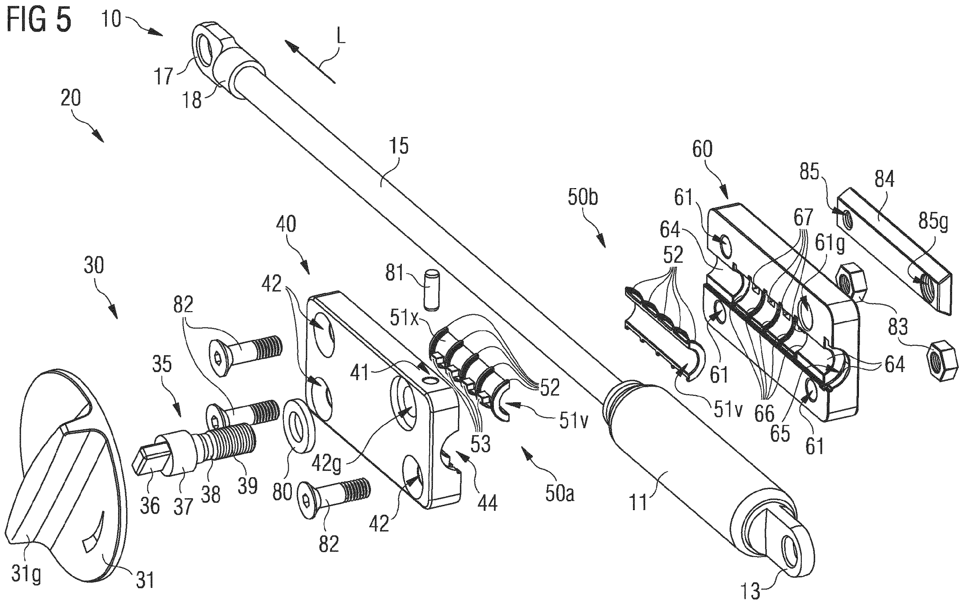

Wie insbesondere aus den Sprengzeichnungen in Figur 4 und 5 hervorgeht, weist die Gasdruckfeder 10 einen Zylinder 11 und eine darin beweglich gelagerte Kolbenstange 15 auf und das zugehörige Bremssystem 20 umfasst eine hierzu passende Bremsbackenanordnung 21. Diese Bremsbackenanordnung 21 weist wiederum zumindest zwei Bremsbacken 40, 60 auf, welche zwei Bremseinsätze 50a, 50b zwischen sich und dem Zylinder 11 bzw. der Kolbenstange 15 aufnehmen, und einen Betätigungsmechanismus 30 zur Betätigung des Bremssystems 20 bzw. zur Regulierung der Bremskraft des Bremssystems 20.

Der Zylinder 11 der Gasdruckfeder 10, der je nach Lage der Kolbenstange 15 einen mehr oder weniger langen Abschnitt bzw. Kolben-Abschnitt der Kolbenstange 15 (im Folgenden auch "Gasdruckkolben-Abschnitt") in sich aufnimmt, wie auch die Kolbenstange 15 selbst erstrecken sich koaxial in eine Längsrichtung L. Die Längsrichtung L bezeichnet hier zugleich die einzige Bewegungsrichtung, in welcher sich die Kolbenstange 15 bzw. der Gasdruckkolben-Abschnitt der Kolbenstange 15 innerhalb des Zylinders 11 bewegen lässt.

Der im Querschnitt runde Zylinder 11 weist an einem zur Kolbenstange 15 weisenden Endabschnitt 11k einen Ringabschnitt 12 bzw. Ringflansch 12 auf, welcher eine ringförmige Erhöhung relativ zur übrigen Oberfläche des Zylinders 11 bildet. Dieser Ringflansch 12 greift in einem montierten Zustand in eine Befestigungsnut 45, 65 der Bremsbacken 40, 60 - welche weiter unten noch erläutert wird - und sorgt damit für eine Fixierung der Bremsbacken 40, 60 und somit des Bremssystems 20 am Zylinder 11, wodurch die Relativbewegung gebremst werden kann.

Die im Querschnitt ebenfalls runde Kolbenstange 15 der Gasdruckfeder 10, weist an einem zylinderfernen Ende eine Befestigungslasche 17 auf, die über eine Schraubverbindung 18 auf die Kolbenstange 15 geschraubt wird. Am entgegengesetzten anderen Ende der Gasdruckfeder 10, also am kolbenstangenfernen Ende des Zylinders 10, befindet sich eine weitere Öse 13 bzw. Befestigungslasche 13. Die Funktion der beiden Befestigungslaschen 13, 17 ergibt sich anhand der in Figur 3 dargestellten Anordnung der Gasdruckfeder 10 zwischen den beiden diagonalen Gelenkachsen G2, G4 dieser beiden Gelenke 104. In den Befestigungslaschen 13, 17 ist nämlich im fertig montierten Zustand jeweils einer der Verbindungsbolzen 105 so angeordnet, dass eine Kopplung zwischen Gasdruckfeder 10 und Parallelogramm-Ausleger 100 besteht und sich der Parallelogramm-Ausleger 100 erfindungsgemäß mit der Gasdruckfeder 10 bremsen lässt.

Die Drehzapfen 106a, 106b des Parallelogramm-Auslegers 100 können zur diagonalen Aufnahme der Befestigungslaschen 13, 17 der Gasdruckfeder 10 an ihren einander zugewandten Innenseiten jeweils eine Art "Gabelgelenk" bilden, d. h. sie besitzen jeweils eine halbrunde, (hier nicht zu erkennende) Ausnehmung in einem mittleren Abschnitt in Längserstreckung der (Achslager-)Löcher der beiden entsprechenden diagonal gegenüberliegenden Gelenke 104. Diese halbrunden Ausnehmungen in den Drehzapfen 106a, 106b sind dabei jeweils mindestens so tief, dass sich die Befestigungslaschen 13, 17 mit ihren (Befestigungslaschen-)Löchern in einer Flucht mit den (Achslager-)Löcher befinden, so dass jeweils ein Verbindungsbolzen 105 durch beide Löcher verläuft.

Quer zur Längsrichtung L umschließt das Bremssystem 20 mit der oben erwähnten Bremsbackenanordnung 21 den Zylinder 11 und die Kolbenstange 15. Bei entsprechender Betätigung des oben erwähnten Betätigungsmechanismus 30 wird dabei eine Relativbewegung zwischen Zylinder 11 und Kolbenstange 15 gebremst, indem Befestigungselemente 35, 82, 83, 84 der Bremsbackenanordnung 21 die Bremsbacken 40, 60 zusammenhalten und mit einstellbarer Kraft zusammenpressen, wie weiter unten noch erläutert wird. Die zwei Bremsbacken 40, 60 der Bremsbackenanordnung 21 ergeben in verbundenem Zustand im Wesentlichen einen länglichen Quader, der lediglich auf einer der parallel zur Längsrichtung L verlaufenden Längsseiten einen Spalt zwischen den beiden Bremsbacken 40, 60 aufweist (siehe z. B. Figur 6) und dabei einen Abschnitt der Kolbenstange 15 und am zylinderseitigen Ende den Endabschnitt 11k des Zylinders 11 mit dem Ringflansch 12 zwischen sich einschließt.

Die Kopplung der Bremsbacken 40, 60 der Bremsbackenanordnung 21 mittels der Befestigungselemente 35, 82, 83, 84 ist wie folgt realisiert:
Durchgängig durch diesen Quader, also durch beide Bremsbacken 40, 60, sind vier quer, hier rechtwinklig, zur Längsrichtung L verlaufende Senklöcher bzw. Löcher 42, 42g, 61, 61g in den jeweiligen vier Eckbereichen der Bremsbacken 40, 60 ausgebildet bzw. eingearbeitet.

Drei dieser Senklöcher bzw. Löcher 42 an einer ersten Bremsbacke 40 sind exakt gleiche Senklöcher 42, d. h. jeweils für entsprechende Schrauben 82 mit einem "Senkkopf" ausgebildet. Damit nämlich jeweils der Senkkopf der Schrauben 82 in montiertem Zustand bündig zur Oberfläche versenkt ist, laufen diese Senklöcher 42 anfangs auf einer von der Gasdruckfeder 10 abgewandten - der Innenseite gegenüberliegenden - Außenseite der ersten Bremsbacke 40 konisch in Richtung der zugehörigen Innenseite zu.

Das übrige, vierte Loch 42g weist hier einen größeren Lochdurchmesser auf als die zuvor erwähnten anderen drei Senklöcher 42, da es exakt auf eine entsprechende Gewindestange 35 abgestimmt ist, welche weiter unten noch erläutert wird. Dieses Loch 42g besitzt außerdem eine relativ zum Lochdurchmesser verbreiterte, unterlegscheibenförmige Vertiefung zur Aufnahme einer gewöhnlichen Unterlegscheibe 80 im äußersten Bereich der Außenseite der ersten Bremsbacke 40. Senkrecht zu diesem Loch 42g, teilweise dieses Loch 42g innerhalb der ersten Bremsbacke 40 tangential im Inneren schneidend bzw. kreuzend, befindet sich ein weiteres kleineres Loch 41. Es erstreckt sich von der näheren parallel zur Längsrichtung L verlaufenden Längsseite - die Längsseite, auf der sich in verbundenem Zustand der Bremsbacken 40, 60 der oben erwähnte Spalt zwischen den Bremsbacken 40, 60 befindet - bis zur Unterseite des Lochs 42g innerhalb der ersten Bremsbacke 40. Wie in Figur 6 gezeigt ist, sitzt in diesem Loch 41 nach der Montage der Gewindestange 35 ein passend ausgebildeter Sicherungsstift 81, hier ein Zylinderstift 81, als Sicherung, der im Betrieb ein ungewolltes, vollständiges Hineindrehen oder Hinausdrehen der Gewindestange 35 aus den Bremsbacken 40, 60 verhindert, indem er in eine passende Sicherungsstift-Nut 38 in der Gewindestange 35 eingreift, wie unten noch erläutert wird. Beispielsweise könnte das kleine Loch 41 auch ein Innengewinde aufweisen, um als Zylinderstift 81 z. B. einen Gewindestift verwenden zu können.

Die beiden in Figur 4 unteren Löcher 61 an der zweiten (in Figur 4 vorderen) Bremsbacke 60, die sich in koaxialer Verlängerung zu den zugehörigen Löchern 42 in der ersten Bremsbacke 40 erstrecken, sind von der Innenseite bis zur Hälfte der zweiten Bremsbacke 60 "rund" und von der Hälfte bis zur Außenseite der zweiten Bremsbacke 60 mit einem Innensechskant-Senkloch 62 ausgebildet.

Die beiden übrigen, hier in Figur 4 oberen Löcher 61, 61g sind ebenfalls bis zur Hälfte rund. Jenseits der Hälfte - in Richtung zur Außenseite der zweiten Bremsbacke 60 - münden sie dann allerdings in einer "barrenförmigen" Aussparung 63. Die Aussparung 63 erstreckt sich parallel zur Längsrichtung L der Kolbenstange 15 über einen länglichen Abschnitt der zweiten Bremsbacke 60, der im Wesentlichen die beiden Löcher 61, 61g sowie den dazwischen befindlichen Zwischenraum umfasst.

Zwischen den Senklöchern bzw. Löchern 42, 42g, 61, 61g ist an den einander zugewandten Innenseiten der beiden Bremsbacken 40, 60 jeweils mittig eine sich in Längsrichtung L im Wesentlichen über die gesamte Länge der Bremsbacken 40, 60 erstreckende, konkave Ausnehmung 44, 64 ausgespart, die an jeder Bremsbacke 40, 60 jeweils die Form eines ausgesparten "Halbzylinders" beschreibt bzw. besitzt. In den konkaven Ausnehmungen 44, 64 der Bremsbacken 40, 60 sitzt in montiertem Zustand jeweils passgenau einer der Bremseinsätze 50a, 50b, wie nachfolgend noch erläutert wird.

Weiter vertieft, relativ zum tiefsten Punkt der Oberfläche der konkaven Ausnehmungen 44, 64 befinden sich weitere Vertiefungen bzw. Verzahnungselemente 45, 46, 47, 65, 66, 67 innerhalb der Ausnehmungen 44, 64, welche im Wesentlichen dazu bestimmt sind, Erhöhungen bzw. Gegenverzahnungselemente 12, 52, 53 der Bremseinsätze 50a, 50b und des Zylinders 11 in sich aufzunehmen. Ein zusammengehöriges Element dieser Verzahnungselemente 45, 46, 47, 65, 66, 67 bilden die oben erwähnten Befestigungsnuten 45, 65 (siehe Figur 4 bzw. 5), die aus zwei halbkreisförmigen Nuten bzw. Rillen bestehen, welche zusammen vollumfänglich durch den Ringflansch 12 des Zylinders 11 ausgefüllt werden, so dass eine fixe, formschlüssige Verbindung bzw. Verzahnung zwischen den Bremsbacken 40, 60 und dem Zylinder 11 vorliegt.

Wie in Figur 4 bzw. 5 zu sehen ist, ist eine jede der einzelnen, voneinander beabstandeten Verzahnungsnuten 46, 66 für sich im Wesentlichen identisch zu einer der beiden Befestigungsnuten 45, 65 ausgebildet. Die Verzahnungsnuten 46, 66 unterscheiden sich dabei lediglich in ihrer Anzahl und Position in Längsrichtung L der konkaven Ausnehmungen 44, 64 relativ zu den zuvor erwähnten Befestigungsnuten 45, 65. Sie befinden sich in einem, relativ zur Längsrichtung L mittigen, Abschnitt der Bremsbacken 40, 60, der exakt die Maße der zugehörigen Bremseinsätze 50a, 50b aufweist. Zwischen den einzelnen Verzahnungsnuten 46, 66 befinden sich jeweils mehrere identische Verzahnungslöcher 47, 67. Die Verzahnungslöcher 47, 67 sind jeweils rechteckig ausgesparte Vertiefungen.

Die oben bereits mehrfach erwähnten länglichen Bremseinsätze 50a, 50b sind in ihrer Form - im Schnitt quer durch ihre Längsrichtung im Wesentlichen "halbmondförmig" - außen passgenau für die konkaven Ausnehmungen 44, 64 der Bremsbacken 40, 60 ausgebildet. Nach der Montage sitzen die Bremseinsätze 50a, 50b in den konkaven Ausnehmungen 44, 64 an den Innenseiten der Bremsbacken 40, 60 und stehen jeweils mit einer konkaven Innenseite 51v unter Betätigung des Betätigungsmechanismus 30 in Kontakt mit der Kolbenstange 15. Die konkaven Innenseiten 51v der Bremseinsätze 50a, 50b schmiegen sich dabei passgenau an die Kolbenstange 15, ohne dabei die Kolbenstange 15 vollumfänglich zu umschließen und aneinander zu stoßen. Auf einer konvexen Außenseite 51x der Bremseinsätze 50a, 50b, die sich durch den halbmondförmigen Querschnitt ergibt, befinden sich jeweils die oben erwähnten Erhöhungen bzw. Gegenverzahnungselemente 52, 53. Diese Verzahnungsstege 52 und Verzahnungszapfen 53 greifen passgenau in die zugehörigen Verzahnungsnuten 46, 66 und Verzahnungslöcher 47, 67 der jeweiligen Bremsbacke 40, 60.

Um die Bremsbacken 40, 60 und die darin eingesetzten Bremseinsätze 50a, 50b auf einer gegenüber dem kleinen Loch 41 liegenden Längsseite zusammenzuhalten, werden die beiden in den Figuren 4 und 5 unteren, zuvor erwähnten Schrauben 82 jeweils mittels einer Sechskantmutter 83 festgezogen. Die Sechskantmuttern 83 sind dabei in den beiden Innensechskant-Senklöchern 62 (siehe Figur 4) gegen Verdrehen gesichert. Die in den Figuren 4 und 5 hintere, obere, dritte Schraube 82 wird in ein Innengewinde in einer Bohrung einer länglichen, entsprechend "barrenförmigen" Trapezmutter 84, welche in die oben erwähnte barrenförmige Ausnehmung 63 eingesetzt ist, eingeschraubt. D. h. sie ist lediglich so fest angezogen, dass sie in Verbindung mit der Trapezmutter 84 zumindest an diesem Ende der Trapezmutter 84 die Bremsbacken 40, 60 auf der in Figur 4 oberen Längsseite, welche das kleine Loch 41 aufweist, zusammenhält.

Die oben erwähnte Gewindestange 35 kann dann in einem passenden Innengewinde 85g am anderen Ende der Trapezmutter 84 zur Regulierung der Bremskraft des Bremssystems 20 nahezu beliebig festgezogen werden. Die längliche Trapezmutter 84 sorgt dabei dafür, dass die Bremseinsätze 50a, 50b auf ihrer gesamten Länge gegen die Kolbenstange 15 gepresst bzw. gedrückt werden.

Um die Gewindestange 35 festziehen bzw. betätigen zu können, hat sie an einem von den Bremsbacken 40, 60 wegweisenden Ende einen Außenvierkant-Kopf 36 (siehe besonders gut in Figur 5). In Richtung zu den Bremsbacken 40, 60, also zur Spitze, besitzt die Gewindestange 35 anschließend einen Scheiben-Abschnitt 37 mit breiterem Außendurchmesser (ohne Außengewinde), welcher breiter ist als der Innendurchmesser der oben erwähnten Unterlegscheibe 80. In einer sich daran wiederum anschließenden Sicherungsstift-Nut 38, in welcher sie durch den ebenfalls oben erwähnten Sicherungsstift bzw. Zylinderstift 81 in der montierten Position blockiert wird, ist der Außendurchmesser der Gewindestange 35 kleiner als davor und danach. Nach der Sicherungsstift-Nut 38 schließt sich endseitig ein Gewinde-Abschnitt 39 (mit Außengewinde) an, mit welchem sich die Gewindestange 35 in dem oben angegebenen Innengewinde 85g der Trapezmutter 84 festziehen lässt.

Zur benutzerfreundlicheren Betätigung des Bremssystems 20 umfasst der Betätigungsmechanismus 30 den bereits oben in Zusammenhang mit den Figuren 2 und 3 genannten runden, im Wesentlichen scheibenförmigen Bremsknopf 31, wie insbesondere auch in Figur 6 zu erkennen ist. Auf einer in Figur 4 gezeigten, zum Außenvierkant-Kopf 36 der Kolbenstange 15 weisenden, runden Flachseite des Bremsknopfes 31 befindet sich, als ein Pendant zum Außenvierkant-Kopf 36, ein Innenvierkant-Sackloch 31s. Auf der rückseitigen Flachseite des Bremsknopfes 31 steht senkrecht zur Oberfläche der Flachseite ein entlang der Oberfläche verlaufender, länglicher Griff 31g zur händischen Bedienung bzw. Betätigung für einen Benutzer ab. Mit dem so geformten Bremsknopf 31 kann der Benutzer die Gewindestange 35 jederzeit und ohne weitere Hilfsmittel einfach und genau verdrehen und sehr exakt die Bremskraft der Gasdruckfeder 10 regulieren.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. So kann der Gerätehalter auch so ausgebildet sein, dass er mehr als ein Gerät, insbesondere mehrere Monitore, halten kann. Ebenso können Details der Konstruktion modifiziert werden. Beispielsweise sind die gezeigten Verzahnungselemente sowie Gegenverzahnungselemente in den Bremsbacken untereinander beliebig austauschbar und/oder kombinierbar. Alternativ oder zusätzlich dazu können die Bremseinsätze von weiteren geeigneten, in den zuvor gezeigten Ausführungsbeispielen nicht beschriebenen, Gegenverzahnungselementen bedeckt sein. Zudem können beispielsweise auch andere Befestigungselemente als die beschriebenen Schrauben zum Zusammenhalten der Bremsbacken verwendet werden. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einrichtung", "Anordnung" und "System" nicht aus, dass die betreffende Komponente aus mehreren zusammenwirkenden Teilkomponenten besteht, die gegebenenfalls auch räumlich verteilt sein können.

### Bezugszeichenliste

- 1: Monitor / Anzeigevorrichtung
- 2: Bezugsobjekt / Tischplatte
- 10: Bewegungsdämpfer / Gasdruckfeder
- 11: Zylinder
- 11k: zur Kolbenstange weisender Endabschnitt
- 12: Ringabschnitt / Ringflansch
- 13: Befestigungslasche
- 15: Kolbenstange
- 17: Befestigungslasche
- 18: Schraubverbindung
- 20: Bremssystem
- 21: Bremsbackenanordnung
- 30: Betätigungsmechanismus
- 31: Bremsknopf
- 31g: Griff
- 31s: Sackloch
- 35: Gewindestange
- 36: Außenvierkant-Kopf
- 37: Scheiben-Abschnitt
- 38: Sicherungsstift-Nut
- 39: Gewinde-Abschnitt
- 40: erste Bremsbacke
- 41: Loch
- 42: Senklöcher
- 42g: Loch
- 44: konkave Ausnehmung
- 45: Befestigungsnut
- 46: Verzahnungsnuten
- 47: Verzahnungslöcher
- 50a, b: Bremseinsatz
- 51v: konkave Innenseite
- 51x: konvexe Außenseite
- 52: Verzahnungsstege
- 53: Verzahnungszapfen
- 60: zweite Bremsbacke
- 61: runde Löcher
- 61g: Loch
- 62: Innensechskant-Senkloch
- 63: Trapezquader-Aussparung
- 64: konkave Ausnehmung
- 65: Befestigungsnut
- 66: Verzahnungsnuten
- 67: Verzahnungslöcher
- 80: Unterlegscheibe
- 81: Sicherungsstift / Zylinderstift
- 82: Schrauben
- 83: Sechskantmuttern
- 84: Trapezmutter
- 85: Innengewinde
- 100: Parallelogramm-Ausleger
- 101: Doppelarm
- 102: Längsstreben
- 103: Querstrebenabdeckung / Abdeckhülsen
- 104: Gelenke
- 105: Verbindungsbolzen
- 106a, b: Querstreben / Drehzapfen
- 107: Löcher
- 108: Abrundungen / Abschrägungen
- 109a, b: Auskerbung
- 110: Abflachungen
- 111: Verkleidung / Blenden
- 200: Gerätehalter / Monitorhalter
- 201: Gelenkanordnung
- 202: Drehlager
- 210: Ankupplungsteil
- 211: VESA-Halterung / Adapter
- 220: Basisteil
- 221: Tischklemme
- 222: Stellschraube
- 230: Linear-Ausleger
- 231: Arm

- G1, G2, G3, G4: Gelenkachsen
- D1, D2, D3: Drehlagerachsen
- L: Längsrichtung

## Patentansprüche

1. Bewegungsdämpfer (10) mit einem Zylinder (11) und einer darin beweglich gelagerten Kolbenstange (15), wobei der Bewegungsdämpfer (10) zur Regulierung einer Bremskraft ein Bremssystem (20) aufweist, das am Zylinder (11) und/oder an der Kolbenstange (15) befestigt ist und dabei auf das jeweils andere Element bremsend einwirkt.

2. Bewegungsdämpfer nach Anspruch 1, wobei das Bremssystem (20) eine Bremsbackenanordnung (21) mit, vorzugsweise zumindest zwei, Bremsbacken (40, 60) aufweist, welche vorzugsweise an verschiedenen, besonders bevorzugt im Wesentlichen gegenüberliegenden, Seiten an zumindest einem Abschnitt der Kolbenstange (15) und/oder einem Abschnitt des Zylinders (11) anliegen und gegen den Abschnitt der Kolbenstange (15) und/oder den Abschnitt des Zylinders (11) pressbar sind.

3. Bewegungsdämpfer nach Anspruch 1 oder 2, wobei das Bremssystem (20) an einem zur Kolbenstange (15) weisenden Endabschnitt (11k) befestigt ist und eine Bremsbackenanordnung (21) mit Bremsbacken (40, 60) aufweist, die gegen die aus dem Endabschnitt (11k) des Zylinders (11) herausragende Kolbenstange (15) pressbar sind.

4. Bewegungsdämpfer nach Anspruch 2 oder 3, wobei das Bremssystem (20) einen Betätigungsmechanismus (30) aufweist, um die Bremsbacken (40, 60) der Bremsbackenanordnung (21) gegen die Kolbenstange (15) oder den Zylinder (11) zu pressen.

5. Bewegungsdämpfer nach einem der Ansprüche 2 bis 4, wobei die Bremsbackenanordnung (21) zur Regulierung einer Bremskraft zusammenwirkende Befestigungselemente (35, 82, 83, 84) an den Bremsbacken (40, 60) aufweist.

6. Bewegungsdämpfer nach einem der Ansprüche 2 bis 5, wobei zumindest ein Befestigungselement (35) eine Gewindestange (35) umfasst, die an zumindest einer ersten Bremsbacke (40) drehbar gelagert ist, wobei sich eine zweite Bremsbacke (60) mittels der Gewindestange (35) zur Regulierung der Bremskraft an die erste Bremsbacke (40) heranziehen lässt.

7. Bewegungsdämpfer nach einem der Ansprüche 2 bis 6, wobei die Bremsbacken (40, 60) jeweils zumindest eine in Längsrichtung der Kolbenstange (15) verlaufende konkave Ausnehmung (44, 64) zur Aufnahme der Kolbenstange (15) aufweisen, wobei in der Ausnehmung (44, 64) vorzugsweise mehrere in Längsrichtung der Kolbenstange (15) voneinander beabstandete Verzahnungselemente (46, 47, 66, 67) angeordnet sind.

8. Bewegungsdämpfer nach einem der Ansprüche 2 bis 7, wobei die Bremsbacken (40, 60) zumindest einen Bremseinsatz (50a, 50b) umfassen, der vorzugsweise in der konkaven Ausnehmung (44, 64) einer der Bremsbacken (40, 60) angeordnet ist, vorzugsweise mit zumindest einem Gegenverzahnungselement (52, 53), welches mit zumindest einem Verzahnungselement (46, 47, 66, 67) in der Ausnehmung (44, 64) zusammenwirkt.

9. Bewegungsdämpfer nach einem der Ansprüche 2 bis 8, wobei die Bremsbacken (40, 60) an einem zylinderseitigen Ende mit dem zur Kolbenstange (15) weisenden Endabschnitt (11k) des Zylinders (11) formschlüssig gekoppelt sind, wobei die Bremsbacken (40, 60) vorzugsweise jeweils eine Befestigungsnut (45, 65) aufweisen, in welche zumindest ein Ringabschnitt an der Zylinderoberfläche des Zylinders (11) formschlüssig eingreift.

10. Bewegungsdämpfer nach einem der vorstehenden Ansprüche, wobei die Kolbenstange (15) an einem zylinderfernen, freien Ende eine Befestigungslasche (17) aufweist, wobei die Befestigungslasche (17), vorzugsweise über eine Schraubverbindung (18), mit der Kolbenstange (15) gekoppelt ist, und/oder
wobei der Zylinder (11) an einer kolbenstangenfernen Seite eine Befestigungslasche (13) aufweist.

11. Parallelogramm-Ausleger (100), insbesondere zur Verwendung für einen Gerätehalter (200), mit zumindest
- einem Doppelarm (101) mit zwei in Längsrichtung des Doppelarms (101) verlaufenden, länglichen, voneinander beabstandeten Längsstreben (102), und zwei die Längsstreben (102) jeweils gelenkig verbindenden Querstreben (106a, 106b), welche die Längsstreben (102) unter Bildung eines Parallelogramms jeweils an zwei voneinander beabstandeten Gelenken (104) miteinander koppeln,
- mit zumindest einem Bewegungsdämpfer (10) gemäß einem der Ansprüche 1 bis 10, der diagonal die zwei Längsstreben (102) und/oder Querstreben (106a, 106b) des Doppelarms (101) untereinander gelenkig verbindet.

12. Parallelogramm-Ausleger nach Anspruch 11, wobei das Bremssystem (20) des Bewegungsdämpfers (10) zumindest einen Bremsknopf (31) aufweist, wobei zumindest der Bremsknopf (31) außen an einer Verkleidung (111) des Parallelogramm-Auslegers (100) angeordnet ist.

13. Gerätehalter (200), vorzugsweise für einen zu haltenden Monitor (1), mit zumindest
- einem Basisteil (220) zur Anordnung an einem Bezugsobjekt (2),
- einem Ankupplungsteil (210) zur Ankupplung eines zu haltenden Geräts (1), vorzugsweise eines Monitors (1),
- einer das Basisteil (220) und das Ankupplungsteil (210) verbindenden Gelenkanordnung (201), welche zumindest einen Bewegungsdämpfer (10) gemäß einem der Ansprüche 1 bis 10, insbesondere einen Parallelogramm-Ausleger (100) nach Anspruch 11 oder 12, umfasst.

14. Gerätehalter nach Anspruch 13, wobei die Gelenkanordnung (201) einen Linear-Ausleger (230) mit zumindest einem länglichen, starren Arm (231) aufweist, welcher vorzugsweise an einem Endabschnitt über ein Drehlager (202) mit dem Parallelogramm-Ausleger (100) gekoppelt ist und besonders bevorzugt an einem anderen Endabschnitt über ein weiteres Drehlager (202) mit dem Basisteil (220) gekoppelt ist.

15. Verwendung eines Bewegungsdämpfers (10) nach einem der Ansprüche 1 bis 10, insbesondere eines Parallelogramm-Auslegers (100) nach Anspruch 11 oder 12 bzw. eines Gerätehalters (200) nach Anspruch 13 oder 14, zum Halten zumindest einer Benutzerschnittstelle, insbesondere einer Anzeigevorrichtung (1), um die Position der elektrischen Anzeigevorrichtung (1) im Raum einstellbar zu halten.
